# EUROPEAN PATENT APPLICATION

(11) **EP 3 051 127 A1**
(43) Date of publication of application: **03.08.2016**
(21) Application number: 13894495.4
(22) Date of filing: 25.09.2013
(51) Int. Cl.: F03D 13/00

(54) **WIND TURBINE DEVICE, ABNORMALITY DETECTION DEVICE FOR WIND TURBINE DEVICE, AND ABNORMALITY DETECTION METHOD FOR WIND TURBINE DEVICE**

(71) Applicant: Hitachi, Ltd., Chiyoda-ku Tokyo 100-8280 (JP)
(72) Inventor: UEKI Yosuke, Tokyo 100-8280 (JP)
(74) Representative: MERH-IP Matias Erny Reichl Hoffmann Patentanwälte PartG mbB
(86) International application number: PCT/JP2013/075789
(87) International publication number: WO 2015/045014

(57) **Abstract**

The present invention addresses the problem of providing a wind turbine device equipped with a blade deformation measurement means that is excellent in terms of ease of installation and reliability and is capable of performing measurement with high precision. This wind turbine device is used for wind power generation, and has blades serving as rotary wings, a rotor that supports the blades, an electrical generator that is connected to the rotor, a nacelle that covers the rotor, and a tower that supports the nacelle. A means for detecting passing of the blades is disposed at least at one position on the tower.

## Description

### Technical Field

The present invention relates to a wind turbine device, an abnormality detection device for the wind turbine device, and an abnormality detection method for the wind turbine device. In particular, it relates to the wind turbine device, the abnormality detection device for the wind turbine device, and the abnormality detection method for the wind turbine device that are suitable for measuring deformation of a blade of the wind turbine device.

### Background Art

A wind turbine device is an energy converting device used for wind power generation. At least two or more blades are mounted on a rotor, and the rotor is coupled to an electrical generator directly or indirectly through a gear box, a hydraulic device, or the like. The rotor is rotated by wind power acting on the blade, and rotational energy of the rotor is converted into electric power by the electrical generator. In general, a housing portion (called a nacelle) housing the electrical generator and the like is mounted to a tower.

In the wind turbine device, in general, the blade is constituted of a fiber-reinforced resin (FRP), which is excellent in specific stiffness and specific strength. On the other hand, the FRP may be damaged by a sudden natural disaster such as a thunderbolt and a momentary strong wind. There is also a possibility that fatigue damage may accumulate due to a repetitive load that constantly occurs. As a first stage, such damage of the FRP leads to a decrease in stiffness of the blade. That is, deformation of the blade is increased when the load is applied. In particular, in an upwind type wind turbine in which the blade faces a windward side, when the decrease in the stiffness due to the damage of the FRP is not dealt with, there is a possibility that the blade may be in contact with the tower. Such phenomenon hardly occurs in a downwind type wind turbine in which the blade faces a leeward side; however, when the damage further progresses, eventually it may result in fracture of the blade, whereby it is preferred that the damage be detected at an earliest possible stage. Under the circumstances, there has been known a deformation measurement technique of the blade.

As the deformation measurement technique, there has been known a technique of measuring the deformation of the blade by mounting a distance sensor on the tower and the nacelle of the wind turbine device and by measuring a distance between the tower and the blade by the distance sensor. Such technique is described, for example, in US 8,139,361 (PTL 1).

Furthermore, as a different technique, there has been known a technique of detecting the deformation of the blade by a wireless transmitter mounted at a tip of the blade. Still furthermore, there has been known a technique of directly measuring strain of the blade by mounting an optical fiber sensor or a strain gauge on the blade. Such technique is described, for example, in JP 2011-127605 A (PTL 2).

### Citation List

### Patent Literature

PTL 1: US 8,139,361
PTL 2: JP 2011-127605 A

### Summary of Invention

### Technical Problem

Among the above-described related arts, in the technique of measuring the distance between the tower and the blade by the distance sensor, it requires no mounting of a sensor or the like on the blade, whereby ease of installation is good, and there is a low possibility that the sensor itself may break. However, it requires a high-precision distance sensor, and it also requires time and effort to make an adjustment after installation. In particular, in a case where a laser type distance sensor is used, the adjustment is especially difficult since a blade surface is not flat. In addition, when using this type, detection accuracy is decreased because a strain generated by wind power in an outward direction of a rotating surface is detected. In a large-scale wind turbine, since the number of rotations is small, there is a large variation in a load applied to each of the blades during one rotation due to fluctuation of wind velocity, whereby the detection accuracy is decreased. In addition, to quantitatively evaluate the damage on the blade, it is preferred that the deformation of the blade be measured with an arbitrary load, whereby it is not considered as ideal. In the technique in which the sensor such as the optical fiber sensor or the strain gauge is directly mounted on the blade, although it has an advantage of being capable of measuring the deformation of the blade with high precision, it is necessary to wire and connect a power supply line and a signal taking out line to these sensors, whereby much labor is required for the installation. Furthermore, a slip ring is required in wiring because the blade is a part of a rotating body, and there is a high possibility that the sensor itself may break down due to a thunderbolt on the blade, whereby it is not considered as ideal from a reliability viewpoint and the like.

Accordingly, an objective of the present invention is to provide a wind turbine device, an abnormality detection device for the wind turbine device, and an abnormality detection method for the wind turbine device that are excellent in terms of ease of installation and reliability and that are capable of measuring with high precision.

### Solution to Problem

To achieve the above-described objective, in an embodiment of the present invention, a wind turbine device is configured to include a detection unit that detects passing of a blade, and a signal processing unit that detects deformation of the blade based on output from the detection unit.

### Advantageous Effects of Invention

With the wind turbine device according to an embodiment of the present invention, measuring with excellent ease of installation and reliability as well as with high precision becomes possible.

### Brief Description of Drawings

[FIG. 1] FIG. 1 is a configuration diagram illustrating one example of a wind turbine device according to the present invention.
[FIG. 2] FIG. 2 is an explanatory drawing illustrating signal processing of one example of the wind turbine device according to the present invention.
[FIG. 3] FIG. 3 is a system block diagram illustrating one example of the wind turbine device according to the present invention.
[FIG. 4] FIG. 4 is a configuration diagram illustrating one example of the wind turbine device according to the present invention.
[FIG. 5] FIG. 5 is an explanatory drawing illustrating signal processing of one example of the wind turbine device according to the present invention.
[FIG. 6] FIG. 6 is a system block diagram illustrating one example of the wind turbine device according to the present invention.

### Description of Embodiments

Hereinafter, examples are described by using the drawings.

### First Example

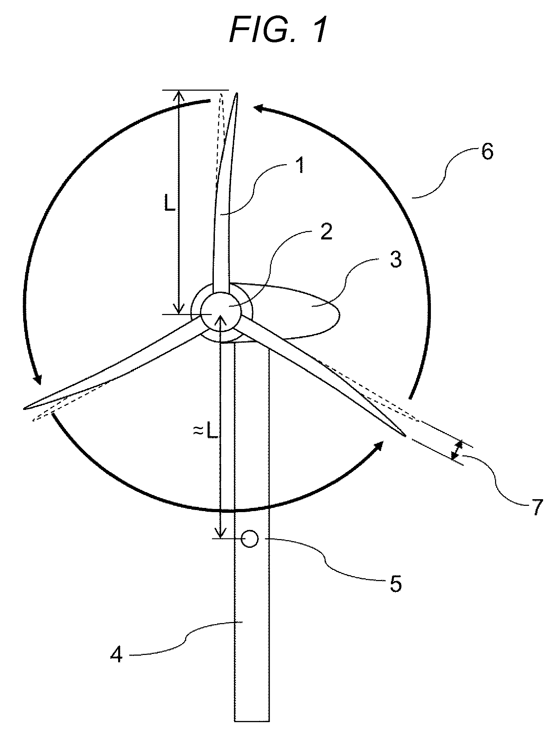

FIGS. 1, 2, and 3 are a configuration diagram of a wind turbine device, an explanatory drawing of signal processing, and a system block diagram, respectively, according to this example. In FIG. 1, when a length of a blade 1 is L, a sensor 5, which is capable of measuring timing of the blade 1 passing nearby, is mounted at a position on a tower 4 apart by approximately L from a rotation axis of a rotor 2.

As the sensor 5, it is possible to use an optical sensor that make use of blocking or reflecting of an ambient light reaching the tower 4 due to passing of the blade 1. As the optical sensor, a photodiode, which is capable of detecting intensity of light only, or the like may be used, whereby it is possible to achieve a simple sensor configuration. In a case where the optical sensor is used, however, there is a possibility that detection sensitivity of passing timing may be significantly decreased at night. In that case, ideally, a sound sensor such as a microphone may be used. A tip speed of the blade 1 reaches several hundreds of kilometers per hour in a large-scale wind turbine device. Thus, a large wind noise occurs due to rotation of the blade 1. In a case where the microphone is used as the timing measurement sensor 5, a sound pressure level increases as the blade 1 approaches the microphone, whereby the passing timing of the blade 1 may be measured by detecting a peak thereof. In addition, the above-described optical sensor needs to be installed on an external surface of the tower 4 and to be installed in plurality on an outer periphery of the tower 4 to deal with yaw control (control of a rotation axis direction corresponding to a wind direction) of the wind turbine device. In contrast, in a case where the sound sensor is used, it is capable of catching a change in the sound pressure level even when it is installed inside the tower 4. Furthermore, by using a non-directional microphone, it is possible to deal with the yaw control of the wind turbine device with one microphone.

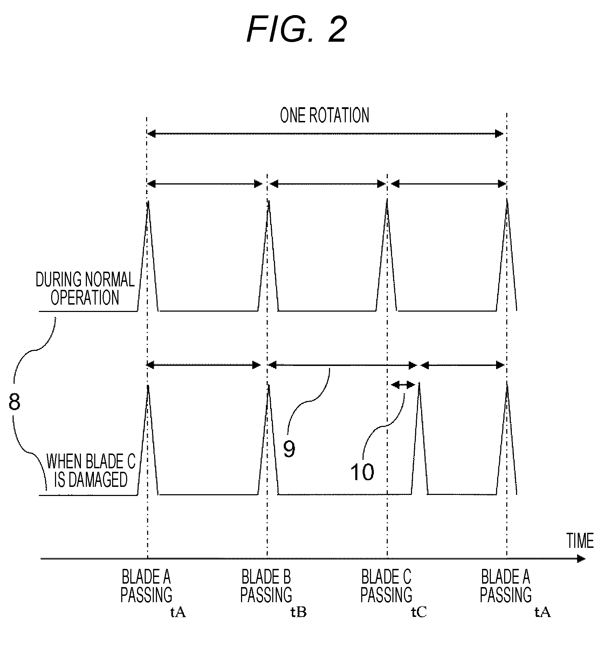

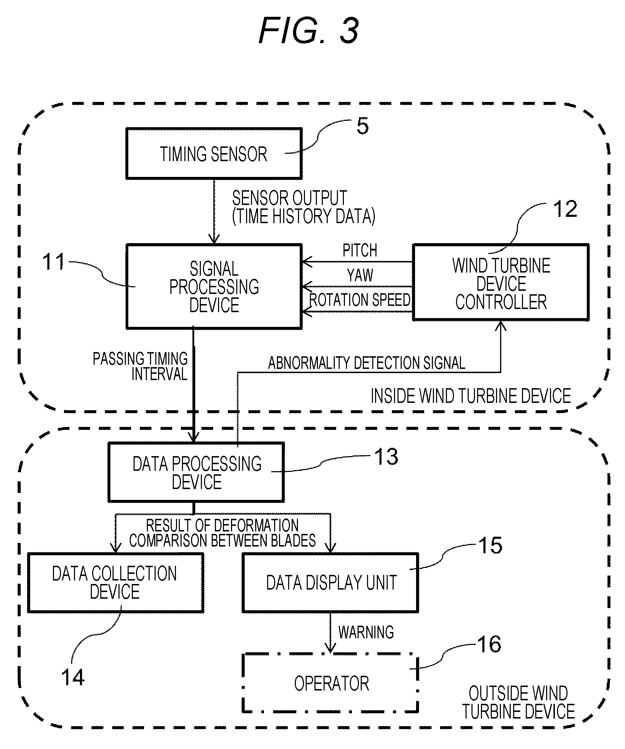

In FIG. 3, inside the wind turbine device, the sensor 5, a signal processing device 11, and a wind turbine control device 12 are provided. From the sensor 5, sensor output as time history data, which are a time tA, a time tB, and a time tC in FIG. 2, is sent to the signal processing device 11. Based on information on pitch, yaw, and rotation speed from the wind turbine control device 12, the signal processing device 11 corrects the sensor output from the sensor 5 and calculates the time tA, time tB, and time tC that are closer to actuality. In the signal processing device 11, based on the blade A passing time tA, the blade B passing time tB, and the blade C passing time tC (each denoted by a reference numeral 9), passing timing intervals (tA - tB), (tB - tC), and (tC - tA) are calculated (for convenience, for example, in a case where two times tA are described close to each other in different timing, it means that the later-described time tA is the time tA in latter timing) . Calculation results, or (tA - tB), (tB - tC), and (tC - tA), are sent to a data processing device 13 together with the blade A passing time tA, the blade B passing time tB, and the blade C passing time tC.

Outside the wind turbine device, the data processing device 13, a data collection device 14, and a data display unit 15 are provided. The data processing device 13 calculates a deformation comparison result between the blades by mutually comparing the passing timing intervals (tA - tB), (tB - tC), and (tC - tA). As such calculation, for example, when the data processing device 13 finds that the blade C passing time tC is shifted by a time equivalent to a reference numeral 10 from an original time as illustrated in FIG. 2, it determines there is a blade deformation and sends an instruction to display that the blade deformation has occurred on the data display unit 15. The calculation result is sent to the data collection device 14 together with the time tA, the time tB, and the time tC and the passing timing intervals (tA - tB), (tB - tC), and (tC - tA), which are stored in the data collection device 14. In this way, a passing detection signal 8 of a tip of each of the blades 1 is obtained. In an exemplary blade passing detection of the wind turbine device having three blades in FIG. 2, during normal operation, all of the blades 1 have equal stiffness, whereby strain 7 of the blades 1 are equivalent, and the passing timing intervals 9 therebetween are equal. However, in a case where damage occurs to a specific blade due to a cause such as a thunderbolt and a gusty wind, a difference 10 occurs to the interval. By monitoring the difference 10, it is possible to detect the damage of the blade 1. Detection of the difference 10 is performed by the signal processing device 11, and for example, by comparing three deviations, which are a deviation between (tA - tB) and (tB - tC), a deviation between (tB - tC) and (tC - tA), and a deviation between (tC - tA) and (tA - tB), with each other, it is possible to determine as occurrence of the blade deformation when a comparison result is larger than a predetermined threshold. Furthermore, by comparing each of (tA - tB), (tB - tC), and (tC - tA) with an average value of (tA - tB), (tB - tC), and (tC - tA), it is also possible to determine as the occurrence of the blade deformation when a comparison result is larger than a predetermined threshold. By setting the threshold for the difference 10 in advance and by giving a warning to an operator 16 when exceeding the threshold, or by automatically transmitting an abnormality detection signal to the wind turbine control device 12 and by controlling a pitch of the blade 1 so as to decrease a wind load, it is possible to prevent fracture of the blade 1. It is also possible to provide a robust assessment against an environmental temperature change. Since the blade 1 is generally constituted of the FRP, apparent stiffness thereof significantly changes with the environmental temperature change caused by a change in an atmospheric temperature and a change in direct sunlight. Thus, even when a fixed external force is assumed, when an environmental temperature fluctuates, an amount of blade deformation also fluctuates. However, the environmental temperature of each of the blades 1 mounted on one wind turbine device may be regarded as the same during rotation thereof. In this method, the damage to the specific blade is detected by relatively comparing the passing timing intervals of the blade 1, whereby it is possible to exclude an influence of a change of the apparent stiffness of the blade caused by the environmental temperature change. In relatively comparing the stiffness of the blade and in performing an assessment, it is preferred that the same external force be loaded on the blade at least during one rotation. Deformation of the blade detected in this example becomes a strain in an inward direction of a rotating surface. An amount of the strain is more dependent on a rotation speed of the rotor 2 than wind velocity. Even when the wind velocity momentarily fluctuates, the rotation speed does not change immediately because inertia exists in a rotation unit including the rotor 2 and the blade 1. Thus, this example focusing on the strain 7 in the inward direction of the rotating surface is also capable of providing a robust assessment of a wind velocity fluctuation. Furthermore, in a case where the wind turbine device is mounted with a brake control, it is possible to perform measurement with higher precision by keeping a fixed rotation speed while measuring the deformation. Furthermore, to exclude an influence of the wind velocity fluctuation in the signal processing, it is also effective to perform acquisition of the timing pulse interval 9 on multiple rotations and to perform an assessment after averaging data.

Note that it is possible to measure only the blade deformation in the inward direction of the rotating surface. However, the wind turbine device in recent years is mounted with a pitch control function capable of changing a blade angle, whereby a change in the stiffness of the blade 1 in an arbitrary direction may be assessed by taking pitch control information into account or by aggressively changing a pitch angle arbitrarily when measuring the deformation.

A signal that is output from the timing measurement sensor 5 may also be processed by the signal processing device mounted inside the wind turbine device. Since the wind turbine device is installed in places such as on the sea or in a mountain area where it is difficult to be accessed by a human, it is preferred that remote monitoring from a distant location be enabled. Since an output signal from various sensors is the time history data, a broad bandwidth is required for directly transmitting such information over a long distance in real time, whereby it is necessary to build a sufficient communication infrastructure. On the other hand, as illustrated in FIG. 3, by performing digital transmission after converting the time history data into information on the timing pulse intervals within the signal processing device 11 inside the wind turbine device, it is possible to significantly reduce data volume. In particular, this configuration is especially effective for a wind farm where a plurality of wind turbine devices is installed and operated.

In this way, the blade deformation is measured by combining the signal processing with a means for measuring the passing timing of the blade mounted on the tower. In the configuration of this example, it is not necessary to mount a sensor requiring a power supply on the blade. Furthermore, a high-precision distance sensor is not necessary, whereby it is possible to provide the highly-reliable measuring means. Still furthermore, since it is capable of detecting the blade deformation in the inward direction of the rotating surface dependent on the rotation speed of the rotor, it is possible to perform a robust measurement of a momentary fluctuation of the wind velocity.

### Second Example

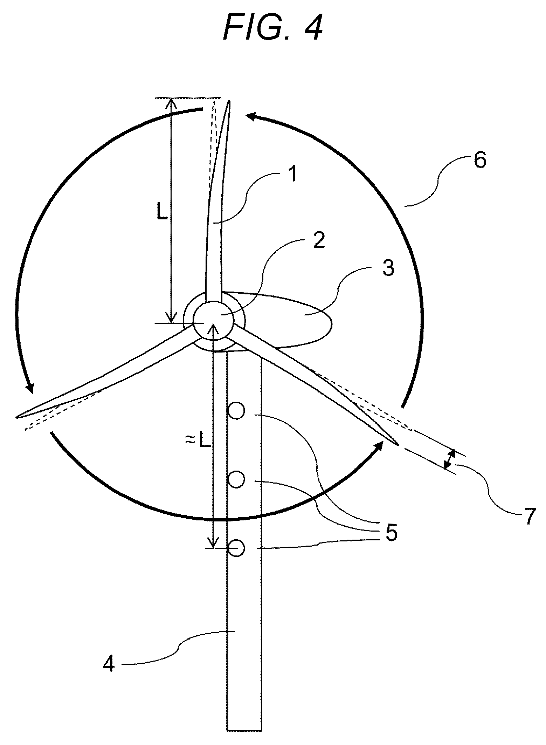

Descriptions are given on other examples. The descriptions focus on differences from First Example. Thus, a part where a description is omitted is basically the same as the example. In this example, there is described an example of a wind turbine device capable of not only specifying a damaged blade but also capable of specifying a position of the damage within the blade. In FIG. 4, a configuration diagram of the wind turbine device according to this example is illustrated. In First Example, one sensor for measuring the passing timing of the tip of the blade 1 is mounted on a tower; however, in this example, to measure the passing timing not only near the tip but also at a plurality of points from a root to the tip of the blade 1, a plurality of sensors 5 is mounted on the tower as illustrated in FIG. 4. In the present invention, as described in First Example, the damage of the blade is detected by the difference in the timing pulse intervals. Such assessment point is provided in plurality from the root to the tip of the blade 1. By using such configuration, it is possible to roughly know in which position the damage has occurred within the blade 1. To detect the passing timing of a supporting portion of the blade 1 of the rotor 2, by using information of the rotation speed of the rotor 2 obtained from the wind turbine device controller 12, it is possible to use a value obtained by dividing a time required for one rotation by the number of blades directly as a passing interval. When damage occurs to a certain position within the blade 1, stiffness is locally decreased in that position. At this time, by focusing on a timing pulse interval 9 of each of the assessment points, it is possible to roughly specify the position where the damage has occurred since the pulse interval is no longer even on a tip side of the position where the damage has occurred. In recent years, the blade of the wind turbine device is becoming larger in scale, and a large-scale blade may have a total length of 50 meters or longer. Thus, knowing the position of the damage prior to an inspection and a repair on the site leads to improved work efficiency.

In a case where it is necessary to measure the passing timing at a plurality of points as in this example, a sound sensor as in First Example may be insufficient. As it is closer to the root of the blade, a speed thereof is lower, and accompanied by this, the sound pressure level generated by passing of the blade is also lower. To avoid this, application of a magnetic sensor is effective. On the blade 1 side, a plurality of permanent magnets requiring no power supply is mounted from a tip of the blade. Then, on the tower 4 side, the magnetic sensors are mounted to positions corresponding to the permanent magnets, respectively. Although various types of magnetic sensor systems exist, it may be a system in which a coil is simply mounted on an exterior or interior of the tower 1. The permanent magnets mounted on the blade approach and separate from the coil at a certain speed. Therefore, a magnetic field near the coil changes, whereby electromotive force is generated in the coil based on a principle of electromagnetic induction. Therefore, it is possible to determine passing of the blade 1 from a potential change in the coil.

### Third Example

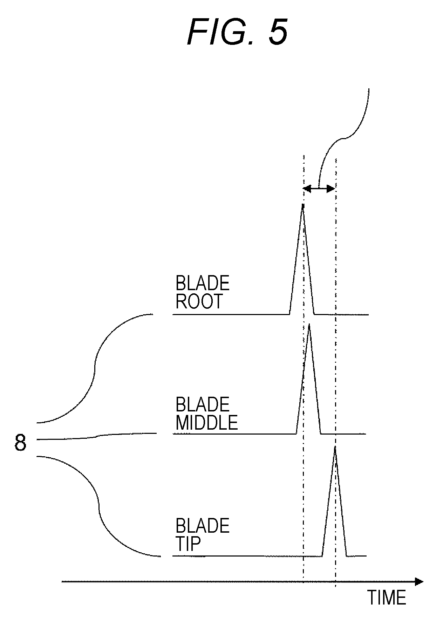

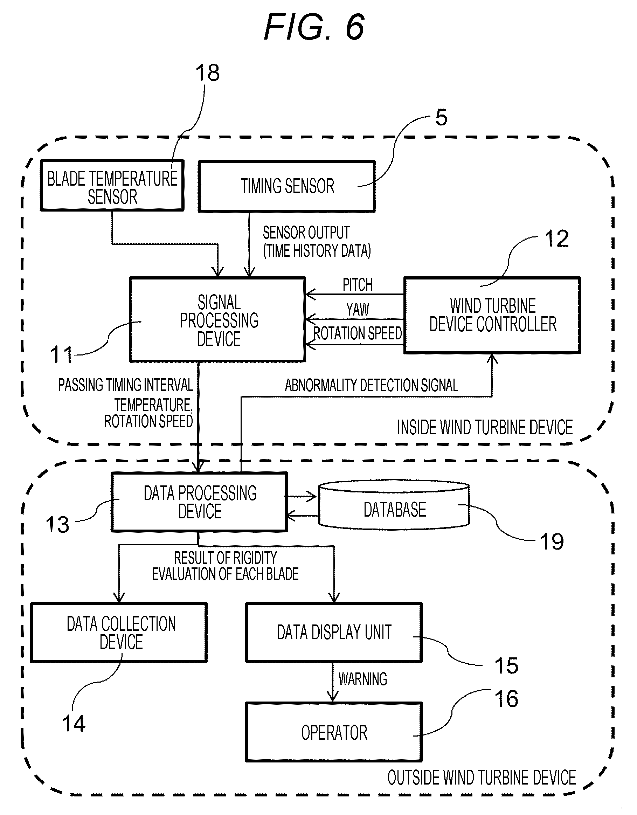

In First and Second Examples, a damage of a specific blade or a specific position is detected by relatively comparing the stiffness between multiple blades. However, the damage of the blade depends on aging of a FRP that is used as well as constant repeating stress, and there is a possibility that the damage may progress in all of the blades at the same level. It is not possible to assess the damage of the blade caused by such mechanism by a relative deformation comparison between the blades as described in First and Second Examples. Accordingly, in this example, a method of detecting the damage progressing in all of the blades at an equivalent level is described based on a configuration having the plurality of blade passing timing sensors described in Second Example (FIG. 2). In FIGS. 5 and 6, there is illustrated an example of detecting passing of a single blade and a system block diagram thereof, respectively, of this example. In First and Second Examples, the passing timing is compared between the blades; however, in this example, focusing on the single blade, a delay 17 between passing timing at a root position of the blade and passing timing at any other position is obtained. In addition to this, by also considering rotation speed information of the blade, it is possible to absolutely grasp an amount of the deformation of the blade 1 during rotation. Note, however, that the stiffness of the blade 1 greatly changes with the environmental temperature as described in First Example. Accordingly, by acquiring a relationship between the Young' s modulus and a temperature of a FRP material used in the blade in advance and by correcting measurement data based on it, it is possible to independently obtain a stiffness change of each of the blades. To do so, a sensor 18 that measures the temperature of the blade 1 is necessary. As the method, in addition to a method of directly mounting a temperature sensor such as a thermocouple to the blade 1, there is also an effective method of measuring a blade temperature in a contactless manner by a radiation thermometer, which is mounted on a still portion such as the tower 4. Furthermore, since an absolute assessment of the stiffness of the blade is required, it is necessary to grasp a relationship between a load generated by rotation of a rotor and blade deformation in advance. In addition to a method of using a computer simulation, there is also possible to build in advance a database 19 (of a relationship between the rotation speed and the amount of the deformation) at a stage right after start of operation when there is less damage of the blade by acquiring the relationship between the rotation speed and the blade deformation from actual operation data. During the operation thereafter, it is possible to configure such that an assessment of deformation is performed on each of the blades by a data processing device, and a warning is given when deformation deviating from the database 19 is measured.

Note that it is possible to operate the configuration of this example together with a function of the Second Example since the sensor configuration described in Second Example is directly usable.

### Reference Signs List

- 1: blade
- 2: rotor
- 3: nacelle
- 4: tower
- 5: timing sensor
- 6: rotation direction
- 7: blade strain
- 8: passing detection signal
- 9: passing timing interval
- 10: passing timing interval difference
- 11: signal processing device
- 12: wind turbine controller
- 13: data processing device
- 14: data collection device
- 15: data display unit
- 16: operator
- 17: passing timing delay
- 18: blade temperature sensor
- 19: database

## Claims

1. A wind turbine device used for wind power generation, the wind turbine device comprising:
a blade serving as a rotary wing;
a rotor supporting the blade;
an electrical generator connected to the rotor;
a nacelle housing the rotor therein; and
a tower supporting the nacelle, wherein
the wind turbine device further includes
a detection unit configured to detect passing of the blade, and
a signal processing unit configured to detect deformation of the blade based on output from the detection unit.

2. The wind turbine device according to claim 1, wherein
based on a signal from the detection unit, the signal processing unit is configured to calculate a passing interval between each of the blades and to relatively compare the passing intervals.

3. The wind turbine device according to claim 2, wherein
the signal processing unit is configured to average the passing intervals of multiple rotations.

4. The wind turbine device according to any of claims 1 to 3, wherein
the detection unit includes an optical sensor configured to detect intensity of light.

5. The wind turbine device according to any of claims 1 to 3, wherein
the detection unit includes a microphone configured to detect strength of sound.

6. The wind turbine device according to any of claims 1 to 3, wherein
the blade is provided with at least one permanent magnet, the permanent magnet constituting a magnetic sensor, and the detection unit includes the magnetic sensor.

7. The wind turbine device according to any of claims 1 to 6, wherein
based on output from a plurality of sensors mounted on the tower, passing timing calculated based on a signal from each of the sensors when a single blade passes near the tower is compared with each other.

8. The wind turbine device according to any of claims 1 to 7, wherein
the signal processing unit is connected to a control unit of the wind turbine device.

9. The wind turbine device according to any of claims 1 to 8, wherein
the signal processing unit is mounted inside the nacelle or inside the tower and is connected to a data collection unit outside the wind turbine device through wired connection.

10. The wind turbine device according to any of claims 1 to 8, wherein
the signal processing unit is mounted inside the nacelle or inside the tower and is connected to a data collection unit outside the wind turbine device through wireless connection.

11. An abnormality detection device for a wind turbine device, the abnormality detection device comprising:
a detection unit configured to detect passing of a blade rotating with a rotor for rotating an electrical generator; and
a detector configured to detect deformation of the blade based on output from the detection unit.

12. An abnormality detection method for a wind turbine device, the method comprising:
detecting, by a detection unit, passing of a blade serving as a rotary wing supported by a rotor for rotating an electrical generator; and
detecting deformation of the blade based on output from the detection unit.
